# EUROPÄISCHE PATENTSCHRIFT

(11) **EP 3 153 294 B1**
(45) Veröffentlichungstag und Bekanntmachung des Hinweises auf die Patenterteilung: **24.03.2021**
(21) Anmeldenummer: 16198761.5
(22) Anmeldetag: 01.05.2013
(51) Int. Cl.: B29C 45/27, B29C 45/28

(54) **SPRITZGIESSWERKZEUG**
INJECTION MOULDING TOOL
OUTIL DE MOULAGE PAR INJECTION

(30) Priorität: 16.05.2012 DE 102012104291
(43) Veröffentlichungstag der Anmeldung: 12.04.2017
(62) Teilanmeldung aus: 13166146.4
(73) Patentinhaber: Günther Heisskanaltechnik GmbH, 35066 Frankenberg (DE)
(72) Erfinder: Günther, Herbert, 35108 Allendorf (DE); Sommer, Siegrid, 35099 Burgwald (DE)
(74) Vertreter: Patentanwälte Olbricht Buchhold Keulertz

(56) Entgegenhaltungen:
- WO-A1-2011/007099
- WO-A1-2012/051721
- US-A- 5 037 598
- US-A1- 2004 234 646
- US-B2- 7 841 855

## Beschreibung

Die Erfindung betrifft ein Spritzgießwerkzeug gemäß Anspruch 1.

Um ein fließfähiges Material, insbesondere eine Schmelze, einem trennbaren Werkzeugblock bestehend aus Formplatten zuzuführen, benutzt man gewöhnlich Spritzgießdüsen, insbesondere Heiß- oder Kaltkanaldüsen. Diese haben meist einen temperierten Düsenkörper, in dem ein Strömungs- bzw. Schmelzekanal ausgebildet ist, der an oder in einem Düsenmundstück mündet und mit einer von den Formplatten gebildeten Formkavität des Spritzgießwerkzeugs strömungsverbunden ist. Damit die Schmelze bis an die Formkavität heran auf einer gleichmäßigen Temperatur gehalten wird, besteht das von unten in den Düsenkörper eingebrachte Düsenmundstück aus einem hoch wärmeleitenden Material. Außerdem ist zwischen der Spritzgießdüse und dem Werkzeug ein Luftspalt zur thermischen Trennung ausgebildet.

Von Nachteil hierbei ist, dass aufgrund der meist festen Verbindung zwischen Düsenkörper und Düsenmundstück thermische Längenausdehnungen eine Verschiebung des Düsenmundstücks relativ zur Angussöffnung bewirken. Entsprechend treten am Angusspunkt Bauteilfehler auf.

Zudem kann eine Dichtung zwischen der Spritzgießdüse und der Formangussöffnung versagen, sodass Schmelze austritt und das Spritzgießwerkzeug beschädigt wird.

Das gleiche Problem besteht bei Nadelverschlussdüsen. Verschlussnadeln sind in der Nadelverschlussdüse axialverschiebbar gelagert (siehe beispielsweise DE 3249486 C3 oder DE 3403603 A1). Ein durch einen Düsenkörper verlaufender Schmelzekanal endet gewöhnlich in einem Düsenmundstück, das endseitig die Austrittsöffnung für die Schmelze bildet. In Schließstellung greift das untere Ende der im Querschnitt meist zylindrischen Verschlussnadel in einen ebenfalls zylindrischen Dichtsitz ein, der im Düsenmundstück ausgebildet ist. Die Verschlussnadeln sind vorwiegend pneumatisch oder hydraulisch angetrieben und werden periodisch von einer Öffnungs- in eine Schließstellung gebracht. Um hierbei Beschädigungen am Düsenmundstück sowie am Werkzeug zu vermeiden, ist eine möglichst exakte Nadelführung notwendig.

Zur Verringerung der auch hier auftretenden Dichtigkeitsprobleme zwischen Düsenmundstück und Formplatte sieht bspw. WO 2005 018 906 A1 eine Spritzgießdüse zur Verwendung in einem Spritzgießwerkzeug vor, die einen Düsenkörper mit wenigstens einem Strömungskanal für eine zu verarbeitende Spritzgießmasse aufweist. Der Strömungskanal mündet an oder in einem Düsenmundstück und ist mit einem Formnest des Spritzgießwerkzeugs strömungsverbunden. Das in dem Düsenkörper angeordnete Düsenmundstück ist längsverschiebbar ausgebildet und während des Betriebes der Spritzgießdüse zwischen dem Düsenkörper und einer Formplatte des Spritzgießwerkzeugs eingeklemmt. Problematisch ist hier jedoch die inkonstante Anpresskraft zwischen dem Düsenmundstück und der Formplatte. Außerdem kann sich das Düsenmundstück im Betrieb durch die Einspritzdrücke in Längsrichtung zurück verschieben. Hierdurch können Undichtigkeiten auftreten. Weiterhin kann das Düsenmundstück bei der Montage aus dem Düsenkörper herausfallen.

Es ist ein wichtiges Ziel der Erfindung, diese und weitere Nachteile des Standes der Technik zu überwinden und ein Düsenmundstück für eine Spritzgießdüse sowie zur Verwendung in einem Spritzgießwerkzeug zu schaffen, das mit einfachen Mitteln kostengünstig aufgebaut ist und einen ebenso einfachen wie raschen Wechsel des Düsenmundstücks ermöglicht. Dabei sollen Beeinträchtigungen der Temperaturverteilung und Auswirkungen der Wärmedehnung weitestgehend ausgeschaltet werden. In der Ausgestaltung der Spritzgießdüse als Nadelverschlussdüse soll darüber hinaus eine dauerhaft präzise Nadelführung und -abdichtung erreicht werden, die auch unter hoher Wechselbelastung einen stets zuverlässigen Betrieb gewährleistet.

Die Erfindung betrifft ein Spritzgießwerkzeug entsprechend Anspruch 1. Hauptmerkmale der Erfindung sind im kennzeichnenden Teil von Anspruch 1 angegeben. Ausgestaltungen sind Gegenstand der Ansprüche 2 bis 8.

Die Erfindung betrifft ein Spritzgießwerkzeug zur Verarbeitung einer fließfähigen Masse, mit einer Spritzgießdüse, einem Düsenmundstück und einer Formplatte, die ein Formnest ausbildet, in das eine Formangussöffnung mündet, wobei die Spritzgießdüse einen Düsenkörper umfasst, in dem wenigstens ein Strömungskanal mit einem Kanaleingang und einem Kanalausgang für die fließfähige Masse ausgebildet ist, wobei der Strömungskanal mit seinem Kanalausgang an oder in eine Eintrittsöffnung des Düsenmundstücks mündet, wobei Düsenmundstück einen Strömungskanal mit der Eintrittsöffnung und einer Austrittsöffnung umfasst, wobei das Düsenmundstück eine radial zu einer Längsachse ausgebildete zylindrische erste Dichtfläche umfasst, wobei das Düsenmundstück eine zwischen der ersten Dichtfläche und der Austrittsöffnung angeordnete Anschlagfläche ()umfasst, die quer zur Längsachse sowie in Richtung der Austrittsöffnung weisend ausgerichtet ist, und wobei das Düsenmundstück ein radial zur Längsachse angeordnetes Koppelmittel zur Festlegung des Düsenmundstücks in der Formangussöffnung der Formplatte umfasst, wobei der Düsenkörper im Bereich des Kanalausgangs eine radial zur Längsachse ausgerichtete zylindrische Dichtfläche ausbildet, und wobei das Düsenmundstück mit seiner ersten Dichtfläche dichtend und in Richtung der Längsachse verschieblich an der Dichtfläche des Düsenkörpers gelagert ist, wobei das Düsenmundstück mit seiner Austrittsöffnung in die Formangussöffnung eingeführt ist, und wobei die Formangussöffnung ein Koppelmittel aufweist, welches mit dem Koppelmittel des Düsenmundstücks in Eingriff steht. Das Spritzgießwerkzeug ist dadurch gekennzeichnet, dass das Düsenmundstück mit seinem Koppelmittel an der Formplatte festlegbar ist, wobei das Koppelmittel ein Außengewinde ist, welches koaxial zur Längsachse positioniert ist, und wobei das Koppelmittel der Formangussöffnung entsprechend der Gestaltung des Koppelmittels des Düsenmundstücks ein radial zur Längsachse ausgerichtetes Innengewinde ist. Vorteilhaft hierbei ist, dass das Düsenmundstück mittels der Koppelmittel eine definierte und im Wesentlichen feste Position relativ zur Formangussöffnung aufweist. Damit lassen sich die zuvor beschriebenen Vorteile der Spritzgießdüse und des Düsenmundstücks realisieren.

Trotz der einfachen Austauschbarkeit des Düsenmundstücks sieht eine Weiterentwicklung der Erfindung vor, dass dieses aus einem verschleißfesten Material gefertigt ist. Entsprechend lang sind die Wartungsintervalle. Weiterhin besteht das Düsenmundstück bevorzugt aus einem hoch wärmeleitenden Material, um eine durchströmende Schmelzemasse exakt temperieren zu können.

Gemäß einer vorteilhaften Ausgestaltung ist zwischen dem Koppelmittel und der Austrittsöffnung eine radial zur Längsachse ausgerichtete außenseitige zweite Dichtfläche ausgebildet. Somit ist die Dichtung zwischen Spritzgießdüse und Formplatte sehr nah am Formnest positioniert. Außerdem liegt das Koppelmittel auf der abgeschotteten Seite der Dichtung und wird nicht von Schmelze geflutet. Entsprechend kann das Koppelmittel auch nach zahlreichen Abspritzzyklen einfach betätigt werden.

Entsprechend der Gestaltung des Koppelmittels des Düsenmundstücks ist das Koppelmittel der Formangussöffnung ein Niederhalter für den Halteflansch. Am gegenüberliegenden Ende kann der Düsenkörper mit dem Kanaleingang des Strömungskanals an einem Materialzubringer angeordnet und/oder festgelegt werden. Als Materialzubringer eignen sich sowohl eine Maschinendüse als auch ein Verteiler.

In einer Weiterentwicklung des Spritzgießwerkzeugs ist die Austrittsöffnung des Düsenmundstücks radial zur Längsachse von einer stirnseitigen Formfläche umgeben, die einen Bereich des Formnestes formgebend begrenzt. Auf diese Weise werden hoch qualitative Anspritzpunkte erzielt. Hierfür schließen die Formfläche und eine Formnestwandung des Formnestes bevorzugt bündig ab.

In einer speziellen Version des erfindungsgemäßen Spritzgießwerkzeugs ist im Strömungskanal eine radial zur Längsachse ausgerichtete Nadeldichtfläche für eine Verschlussnadel ausgebildet. Bevorzugt ist die Nadeldichtfläche zylindrisch um die Längsachse ausgebildet sowie vorzugsweise koaxial zur Längsachse positioniert. Favorisiert sind dabei eine Ausrichtung der Nadelführungselemente längs zur Längsachse sowie eine stegförmige Gestaltung.

Gemäß einer anderen speziellen Version des erfindungsgemäßen Spritzgießwerkzeugs bildet das Düsenmundstück einen offenen Anguss aus. Zur Optimierung der Schmelzeströmung und der Temperierung der Schmelzemasse kann das Düsenmundstück dann eine kegelförmige Düsenspitze haben oder ausbilden, die an die Austrittsöffnung heran oder über sie hinaus ragt.

Der bündige Abschluss kann insbesondere bei einer Weiterbildung des Spritzgießwerkzeugs einfach erreicht werden, bei dem die Anschlagfläche des Düsenmundstücks an einer die Formangussöffnung radial umgebenden Anschlagfläche der Formangussöffnung anliegt.

In einer näheren Ausgestaltung des Spritzgießwerkzeugs ist vorgesehen, dass das Düsenmundstück zwischen seinem Koppelmittel und der Austrittsöffnung eine radial zur Längsachse ausgerichtete äußere zweite Dichtfläche aufweist, und dass die Formangussöffnung zwischen ihrem Koppelmittel und dem Formnest eine radial zur Längsachse ausgerichtete Innendichtfläche aufweist, wobei die zweite Dichtfläche des Düsenmundstücks und die Innendichtfläche der Formangussöffnung dichtend aneinander liegen. Entsprechend liegen die Koppelmittel außerhalb der fließfähigen Masse und bleiben daher betätigbar.

Bevorzugt sind die zweite Dichtfläche des Düsenmundstücks und die Innendichtfläche der Formangussöffnung beide zylindrisch um die Längsachse oder beide kegelförmig in Richtung des Formnestes verjüngend um die Längsachse ausgebildet. Eine möglichst schlanke Gestaltung und eine Zentrierung werden insbesondere dann erzielt, wenn die zweite Dichtfläche und die Innendichtfläche der Formangussöffnung koaxial zur Längsachse positioniert sind.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine 3D-Ansicht eines Düsenmundstücks;
- Fig. 2: einen Längsschnitt durch einen Ausschnitt eines Spritzgießwerkzeugs umfassend eine Spritzgießdüse mit einer Verschlussnadel und einem Düsenmundstück;
- Fig. 3: eine Detailansicht des Düsenmundstücks aus Fig. 2; und
- Fig. 4: einen Teillängsschnitt durch einen Ausschnitt eines Spritzgießwerkzeugs umfassend eine Spritzgießdüse mit einem offenen Düsenmundstück.

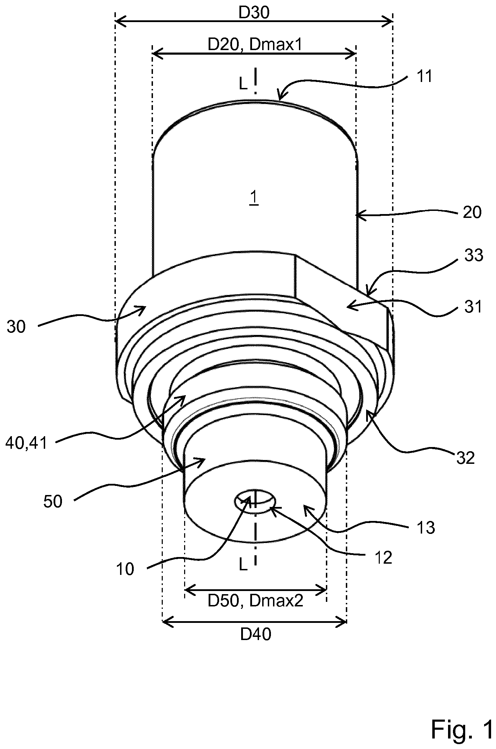

**Fig. 1** zeigt eine 3D-Ansicht eines Düsenmundstücks 1 für eine Spritzgießdüse 100 zur Verwendung in einem Spritzgießwerkzeug 200 und zur Verarbeitung einer fließfähigen Masse M. Hergestellt ist das Düsenmundstück 1 aus einem verschleißfesten und hoch wärmeleitenden Material. Es hat einen Strömungskanal 10 mit einer Eintrittsöffnung 11 (verdeckt) und einer Austrittsöffnung 12. Die Eintrittsöffnung 11 und die Austrittsöffnung 12 liegen koaxial auf einer Längsachse L. Der Strömungskanal 10 ist von der Austrittsöffnung 12 in Richtung der Eintrittsöffnung 11 aufweitend ausgebildet.

Radial und koaxial zur Längsachse L ist eine zylindrische erste Dichtfläche 20 mit einem Durchmesser D20 ausgebildet. Dabei ist die erste Dichtfläche 20 radial außenseitig angeordnet. Der radial zur Längsachse L ausgerichtete Durchmesser D20 der ersten Dichtfläche 20 entspricht dem radial zur Längsachse L ausgerichteten maximalen Durchmesser Dmax1 des Düsenmundstücks 1 in Richtung der Eintrittsöffnung 11.

Zwischen der ersten Dichtfläche 20 und der Austrittsöffnung 12 ist eine Anschlagfläche 32 angeordnet, die quer zur Längsachse L sowie in Richtung der Austrittsöffnung 12 weisend ausgerichtet ist. Insbesondere ist die Anschlagfläche 32 senkrecht zur Längsachse L ausgerichtet. Wie man erkennt, ist die Anschlagfläche 32 von einem radial zur Längsachse L über die erste Dichtfläche 20 hinausstehenden Flansch 30 ausgebildet.

Der Flansch 30 bildet zudem eine quer zur Längsachse L und in Richtung der Eintrittsöffnung 11 zeigende zweite Anschlagfläche 33 aus. Diese ist ebenso senkrecht zur Längsachse L ausgerichtet. Weiterhin dient der Flansch 30 als Werkzeugaufnahme 31, insbesondere durch vorgesehene abgeflachte Seitenflächen.

Das Düsenmundstück 1 umfasst ferner ein radial zur Längsachse L angeordnetes Koppelmittel 40 zur Festlegung des Düsenmundstücks 1 in einer Formangussöffnung 202 (hier nicht gezeigt) einer Formplatte 201 (hier nicht gezeigt). Insbesondere ist das Koppelmittel 40 ein Außengewinde 41, welches koaxial zur Längsachse L positioniert ist. Das Koppelmittel 40, bzw. das Außengewinde 41, ist zwischen der Anschlagfläche 32 und der Austrittsöffnung 12 angeordnet. Der radial zur Längsachse L ausgerichtete Durchmesser D40 des Koppelmittels 40, bzw. des Außengewindes 41, ist kleiner als der radial zur Längsachse L ausgerichtete Durchmesser D30 des Flansches 30. Außerdem ist der Durchmesser D40 des Koppelmittels 40 größer als der radial zur Längsachse L ausgerichtete maximale Durchmesser Dmax2 des Düsenmundstücks 1 in Richtung der Austrittsöffnung 12.

Zwischen dem Koppelmittel 40 und der Austrittsöffnung 12 ist eine radial und koaxial zur Längsachse L ausgerichtete außenseitige, zylindrische zweite Dichtfläche 50 ausgebildet. Hierdurch dient die zweite Dichtfläche 50 auch als radiale Zentrierung. Der Durchmesser D40 des Koppelmittels 40 ist größer als der radial zur Längsachse L ausgerichtete Durchmesser D50 der zweiten Dichtfläche 50.

Die Austrittsöffnung 12 des Düsenmundstücks 1 ist radial zur Längsachse A von einer stirnseitigen Formfläche 13 umgeben, die in einer Montageposition einen Bereich eines Formnestes 203 (hier nicht gezeigt) formgebend begrenzt. Dabei grenzt die Formfläche 13 an die zweite Dichtfläche 50.

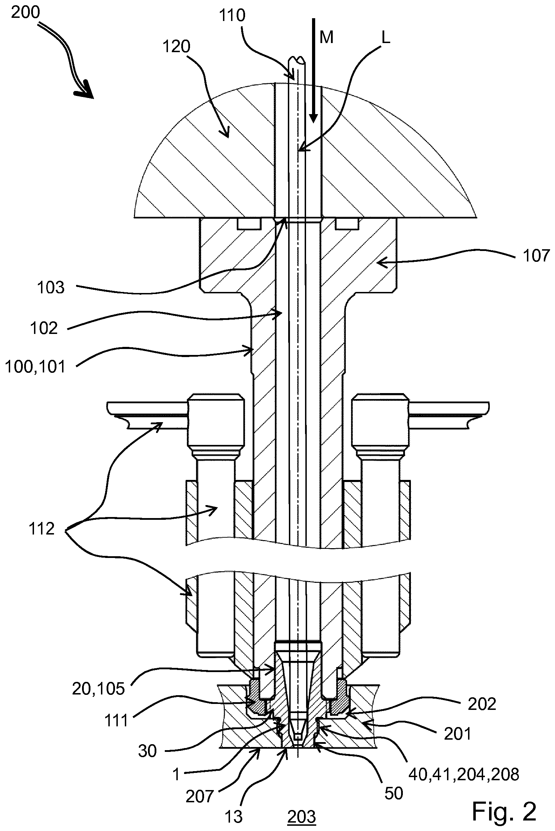

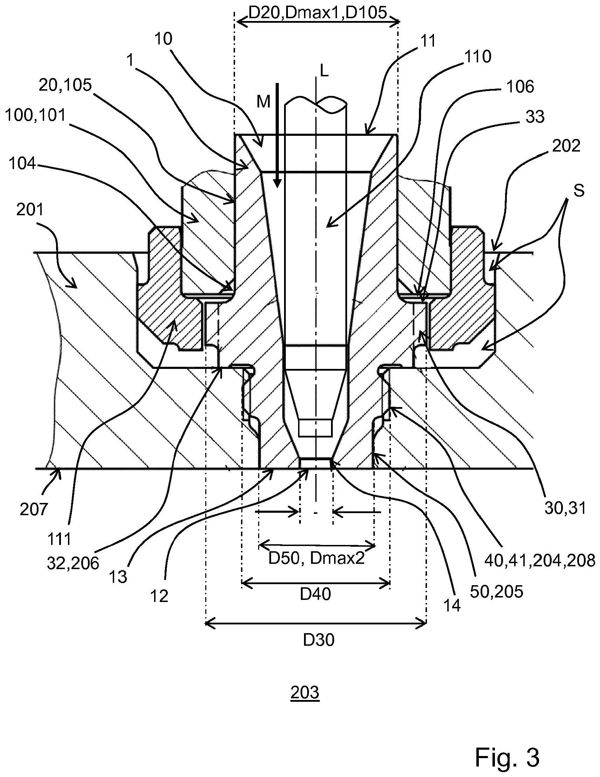

In **Fig. 2** sieht man einen Längsschnitt durch einen Ausschnitt eines Spritzgießwerkzeugs 200 zur Verarbeitung einer fließfähigen Masse M, umfassend eine Spritzgießdüse 100 mit einer Verschlussnadel 110 und einem Düsenmundstück 1 entsprechend einer Gestaltung nach Fig. 1. In Fig. 3 sieht man das Düsenmundstück aus Fig. 2 nochmals in einer Detailansicht. Wie man insbesondere in Fig. 3 erkennen kann, ist im Strömungskanal 10 des Düsenmundstücks 1 eine radial und koaxial zur Längsachse L ausgerichtete zylindrische Nadeldichtfläche 14 für eine Verschlussnadel 110 ausgebildet. Nicht erkennbar sind allerdings in dem Strömungskanal 10 angeordnete Nadelführungselemente.

Die in Fig. 2 dargestellte Spritzgießdüse 100 hat einen Düsenkörper 101, in dem ein Strömungskanal 102 mit einem Kanaleingang 103 und einem Kanalausgang 104 (siehe Fig. 3) für die fließfähige Masse M ausgebildet ist. Der Kanaleingang 103 und der Kanalausgang 104 liegen koaxial auf der Längsachse L, welche der Längsachse L des Düsenmundstücks 1 entspricht. Auch der Strömungskanal 102 verläuft entlang der Längsachse L, insbesondere koaxial zu dieser. Der Strömungskanal 102 mündet mit seinem Kanalausgang 104 in die Eintrittsöffnung 11 des Düsenmundstücks 1. Im Bereich des Kanalausgangs 104 bildet der Düsenkörper 101 eine radial und koaxial zur Längsachse L ausgerichtete, zylindrische sowie innenseitige Dichtfläche 105 aus. Das Düsenmundstück 1 ist mit seiner ersten Dichtfläche 20 dichtend und in Richtung der Längsachse L verschieblich an der Dichtfläche 105 des Düsenkörpers 101 gelagert.

Der der Düsenkörper 101 bildet zudem auf Seiten des Kanalausgangs 104 eine Anschlagfläche 106 aus, die quer zur Längsachse L ausgerichtet ist und mit der Anschlagfläche 32 des Düsenmundstücks 1 korrespondiert.

Die Verschlussnadel 110 erstreckt sich entlang der Längsachse L, insbesondere koaxial zu dieser, durch den Strömungskanal 102 des Düsenkörpers 101 und in den Strömungskanal 10 des Düsenmundstücks 1 hinein. Dabei ist sie entlang der Längsachse L verschiebbar gelagert. In einer Geschlossenstellung (nicht gezeigt) der Spritzgießdüse 100 liegt die Verschlussnadel 110 dichtend an der Nadeldichtfläche 14 an.

Zwischen dem Außengewinde 41 und der Eintrittsöffnung 11 ist das Düsenmundstück 1 teilweise radial von einer Manschette 111 aus einem schlecht wärmeleitenden Material umfasst. Zusätzlich begrenzt die Manschette 111 einen Luftspalt S. Hierbei wird die Manschette 111 vom Düsenkörper 101 getragen, nicht jedoch vom Düsenmundstück 1.

Neben der Spritzgießdüse 100 umfasst das Spritzgießwerkzeug 200 eine Formplatte 201, die ein Formnest 203 (Position nur angedeutet) ausbildet, in das eine Formangussöffnung 202 mündet (erkennbar in Fig. 2 und 3). Das Düsenmundstück 1 ist mit seiner Austrittsöffnung 12 in die Formangussöffnung 202 eingeführt. Dabei weist die Formangussöffnung 202 ein Koppelmittel 204 auf, welches mit dem Koppelmittel 40 des Düsenmundstücks 1 in Eingriff steht. Insbesondere ist das Koppelmittel 204 der Formangussöffnung 202 entsprechend des Koppelmittels 40 des Düsenmundstücks 1 ein radial und koaxial zur Längsachse L ausgerichtetes Innengewinde 208. Die Anschlagfläche 32 des Düsenmundstücks 1 liegt an einer die Formangussöffnung 202 radial umgebenden Anschlagfläche 206 der Formangussöffnung 202 an. Mithin hat das Düsenmundstück 1 eine definierte und im Wesentlichen feste Position relativ zur Formangussöffnung 202.

Wie zu erkennen ist, begrenzt die stirnseitigen Formfläche 13 des Düsenmundstücks 1 einen Bereich des Formnestes 203 formgebend. Hierfür schließt die Formfläche 13 des Düsenmundstücks 13 bündig mit einer Formnestwandung 207 des Formnestes 203 ab. Zwischen dem Koppelmittel 40 und der Austrittsöffnung 12 hat das Düsenmundstück 1 eine radial und koaxial zur Längsachse L ausgerichtete äußere zweite Dichtfläche 50, welche an dessen Formfläche 13 angrenzt. Die Formangussöffnung 202 wiederum weist zwischen ihrem Koppelmittel 204 und dem Formnest 203 eine radial und koaxial zur Längsachse L ausgerichtete Innendichtfläche 205 auf. Dabei liegen die zweite Dichtfläche 50 des Düsenmundstücks 1 und die Innendichtfläche 205 der Formangussöffnung 202 dichtend aneinander.

Erkennbar ist der Düsenkörper 101 der Spritzgießdüse 100 radial von einer manschettenförmigen Heizeinrichtung 112 umfasst. Außerdem ist der Düsenkörper 101 mit dem Kanaleingang 103 des Strömungskanals 102, insbesondere mit seinem Düsenkopf 107, an einem Materialzubringer 120 angeordnet, insbesondere an einer Maschinendüse oder an einem Verteiler.

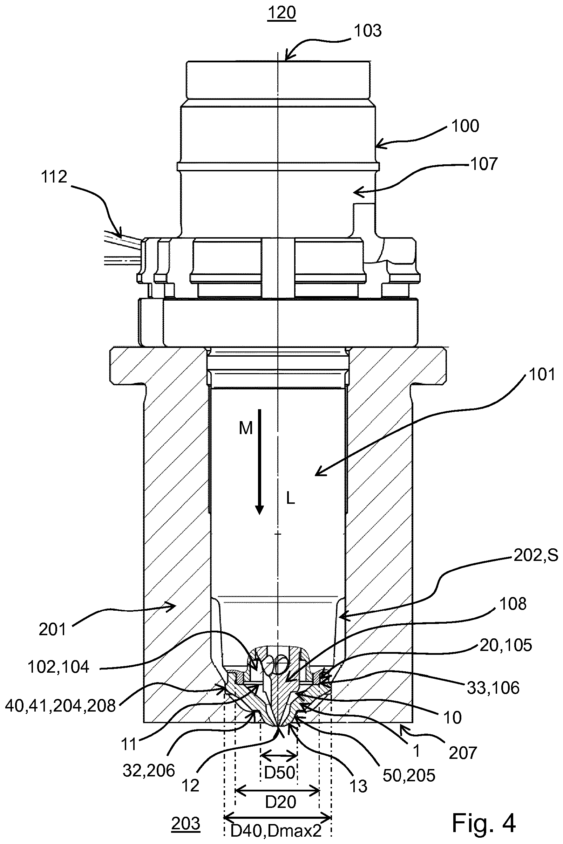

In **Fig. 4** sieht man einen Teillängsschnitt durch einen Ausschnitt eines Spritzgießwerkzeugs 200 zur Verarbeitung einer fließfähigen Masse M, umfassend eine Spritzgießdüse 100 mit einem offenen Düsenmundstück 1.

Das Düsenmundstück 1 ist aus einem verschleißfesten und hoch wärmeleitenden Material hergestellt. Es hat einen Strömungskanal 10 mit einer Eintrittsöffnung 11 und einer Austrittsöffnung 12. Die Eintrittsöffnung 11 und die Austrittsöffnung 12 liegen koaxial auf einer Längsachse L. Der Strömungskanal 10 ist von der Austrittsöffnung 12 in Richtung der Eintrittsöffnung 11 aufweitend ausgebildet.

Radial und koaxial zur Längsachse L ist eine zylindrische erste Dichtfläche 20 mit einem Durchmesser D20 am Düsenmundstück 1 ausgebildet. Dabei ist die erste Dichtfläche 20 radial innenseitig angeordnet.

Zwischen der ersten Dichtfläche 20 und der Austrittsöffnung 12 ist eine außenseitige Anschlagfläche 32 angeordnet, die quer zur Längsachse L sowie in Richtung der Austrittsöffnung 12 weisend ausgerichtet ist. Insbesondere ist die Anschlagfläche 32 senkrecht zur Längsachse L ausgerichtet. In Richtung der Eintrittsöffnung weisend ist zudem innenseitige eine quer zur Längsachse L ausgerichtete zweite Anschlagfläche 33 vorhanden. Diese ist ebenfalls senkrecht zur Längsachse L ausgerichtet.

Das Düsenmundstück 1 umfasst ferner ein radial zur Längsachse L angeordnetes, als Halteflansch ausgebildetes Koppelmittel 40 zur Festlegung des Düsenmundstücks 1 in einer Formangussöffnung 202 einer Formplatte 201.

Zwischen dem Koppelmittel 40 und der Austrittsöffnung 12 ist eine radial und koaxial zur Längsachse L ausgerichtete außenseitige sowie sich kegelförmig in Richtung der Austrittsöffnung 12 verjüngende zweite Dichtfläche 50 ausgebildet. Hierdurch dient die zweite Dichtfläche 50 auch als radiale Zentrierung. Der Durchmesser D40 des Koppelmittels 40 ist größer als der radial zur Längsachse L ausgerichtete Durchmesser D50 der zweiten Dichtfläche 50.

Die Austrittsöffnung 12 des Düsenmundstücks 1 ist radial zur Längsachse A von einer stirnseitigen Formfläche 13 umgeben, die in der gezeigten Montageposition einen Bereich eines Formnestes 203 (Position nur angedeutet) formgebend begrenzt. Dabei grenzt die Formfläche 13 an die zweite Dichtfläche 12 an und ist kalottenförmig. Wie zu erkennen ist, bildet das Düsenmundstück 1 einen offenen Anguss aus. Es verfügt hierbei über eine kegelförmige Düsenspitze 108, die aus Richtung der Eintrittsöffnung 11 an die Austrittsöffnung 12 heranragt.

Weiterhin hat die Spritzgießdüse 100 einen Düsenkörper 101, in dem ein Strömungskanal 102 mit einem Kanaleingang 103 und einem Kanalausgang 104 für die fließfähige Masse M ausgebildet ist. Der Kanaleingang 103 und der Kanalausgang 104 liegen koaxial auf der Längsachse L, welche der Längsachse L des Düsenmundstücks 1 entspricht. Auch der Strömungskanal 102 verläuft entlang der Längsachse L, insbesondere koaxial zu dieser. Der Strömungskanal 102 mündet mit seinem Kanalausgang 104 in die Eintrittsöffnung 11 des Düsenmundstücks 1. Im Bereich des Kanalausgangs 104 bildet der Düsenkörper 101 eine radial und koaxial zur Längsachse L ausgerichtete, zylindrische sowie außenseitige Dichtfläche 105 aus. Das Düsenmundstück 1 ist mit seiner innenseitigen ersten Dichtfläche 20 dichtend und in Richtung der Längsachse L verschieblich an der außenseitigen Dichtfläche 105 des Düsenkörpers 101 gelagert.

Der Düsenkörper 101 bildet zudem auf Seiten des Kanalausgangs 104 eine Anschlagfläche 106 aus, die quer zur Längsachse L ausgerichtet ist und mit der Anschlagfläche 32 des Düsenmundstücks 1 korrespondiert.

Neben der Spritzgießdüse 100 umfasst das Spritzgießwerkzeug 200 eine Formplatte 201, die ein Formnest 203 (Position nur angedeutet) ausbildet, in das eine Formangussöffnung 202 mündet. Das Düsenmundstück 1 ist mit seiner Austrittsöffnung 12 in die Formangussöffnung 202 eingeführt. Dabei weist die Formangussöffnung 202 ein Koppelmittel 204 auf, welches mit dem Koppelmittel 40 des Düsenmundstücks 1 in Eingriff steht. Die Anschlagfläche 32 des Düsenmundstücks 1 liegt an einer die Formangussöffnung 202 radial umgebenden Anschlagfläche 206 der Formangussöffnung 202 an. Mithin hat das Düsenmundstück 1 eine definierte und im Wesentlichen feste Position relativ zur Formangussöffnung 202.

Wie zu erkennen ist, begrenzt die stirnseitige Formfläche 13 des Düsenmundstücks 1 einen Bereich des Formnestes 203 formgebend. Hierfür schließt die Formfläche 13 des Düsenmundstücks 13 bündig mit einer Formnestwandung 207 des Formnestes 203 ab, erhebt sich jedoch in Richtung der Längsachse L kalottenförmig in das Formnest 203. Zwischen dem Koppelmittel 40 und der Austrittsöffnung 12 hat das Düsenmundstück 1 eine radial und koaxial zur Längsachse L ausgerichtete äußere zweite Dichtfläche 50, welche an dessen Formfläche 13 angrenzt. Die Formangussöffnung 202 wiederum weist zwischen ihrem Koppelmittel 204 und dem Formnest 203 eine radial und koaxial zur Längsachse L ausgerichtete Innendichtfläche 205 auf. Dabei liegen die zweite Dichtfläche 50 des Düsenmundstücks 1 und die Innendichtfläche 205 der Formangussöffnung 202 dichtend aneinander.

Erkennbar ist der Düsenkörper 101 der Spritzgießdüse 100 radial von einer manschettenförmigen Heizeinrichtung 112 umfasst, die elektrische Anschlüsse aufweist. Außerdem ist eine Anordnung des Düsenkörpers 101 der Spritzgießdüse 100 mit dem Kanaleingang 103 des Strömungskanals 102, insbesondere mit seinem Düsenkopf 107, an einem Materialzubringer 120, insbesondere an einer Maschinendüse oder an einem Verteiler, angedeutet.

Die Erfindung ist nicht auf eine der vorbeschriebenen Ausführungsformen beschränkt, sondern in vielfältiger Weise abwandelbar. Man erkennt aber, dass die Erfindung ein Düsenmundstück für eine Spritzgießdüse betrifft, das einen Strömungskanal mit einer Eintrittsöffnung und einer Austrittsöffnung, eine radial zu einer Längsachse ausgebildete zylindrische erste Dichtfläche sowie eine zwischen der ersten Dichtfläche und der Austrittsöffnung angeordnete Anschlagfläche aufweist, die quer zur Längsachse sowie in Richtung der Austrittsöffnung weisend ausgerichtet ist. Das Düsenmundstück hat ferner ein als Halteflansch ausgebildetes Koppelmittel (40) zur Festlegung des Düsenmundstücks in einer Formangussöffnung einer Formplatte, das sich radial zur Längsachse (L) über die erste Dichtfläche (20) hinaus erstreckt, wobei der Halteflansch eine in Längsrichtung (L) des Düsenmundstücks (1) zwischen der ersten Dichtfläche (20) und der Austrittsöffnung (12) angeordnete Anschlagfläche ausbildet, die quer zur Längsachse (L) sowie in Richtung der Austrittsöffnung (12) weisend ausgerichtet ist.

**Bezugszeichenliste**

| | | | |
|---|---|---|---|
| 1 | Düsenmundstück | 120 | Materialzubringer |
| | | | |
| 10 | Strömungskanal | | |
| 11 | Eintrittsöffnung | 200 | Spritzgießwerkzeug |
| 12 | Austrittsöffnung | 201 | Form platte |
| 13 | Formfläche | 202 | Formangussöffnung |
| 14 | Nadeldichtfläche | 203 | Formnest |
| | | 204 | Koppelmittel |
| 20 | erste Dichtfläche | 205 | Innendichtfläche |
| | | 206 | Anschlagfläche |
| 30 | Flansch | 207 | Formnestwandung |
| 31 | Werkzeugaufnahme | 208 | Innengewinde |
| 32 | Anschlagfläche | | |
| 33 | zweite Anschlagfläche | Dmax1 | maximaler Durchmesser in Richtung der Eintrittsöffnung |
| 40 | Koppelmittel | Dmax2 | maximaler Durchmesser in Richtung der Austrittsöffnung |
| 41 | Außengewinde | | |
| | | D14 | Durchmesser (Nadeldichtfläche) |
| 50 | zweite Dichtfläche | D20 | Durchmesser (Dichtfläche) |
| | | D30 | Durchmesser (Flansch) |
| 100 | Spritzgießdüse | D40 | Durchmesser (Koppelmittel) |
| 101 | Düsenkörper | D50 | Durchmesser (zweite Dichtfläche) |
| 102 | Strömungskanal | L | Längsachse |
| 103 | Kanaleingang | M | fließfähige Masse |
| 104 | Kanalausgang | S | Luftspalt |
| 105 | Dichtfläche | | |
| 106 | Anschlagfläche | | |
| 107 | Düsenkopf | | |
| 108 | Düsenspitze | | |
| | | | |
| 110 | Verschlussnadel | | |
| 111 | Manschette | | |
| 112 | Heizeinrichtung | | |

## Patentansprüche

1. Spritzgießwerkzeug (200) zur Verarbeitung einer fließfähigen Masse (M), mit
▪ einer Spritzgießdüse (100),
▪ einem Düsenmundstück (1) und
▪ einer Formplatte (201), die ein Formnest (203) ausbildet, in das eine Formangussöffnung (202) mündet,
▪ die Spritzgießdüse (100) umfasst
∘ einen Düsenkörper (101), in dem wenigstens ein Strömungskanal (102) mit einem Kanaleingang (103) und einem Kanalausgang (104) für die fließfähige Masse (M) ausgebildet ist,
∘ wobei der Strömungskanal (102) mit seinem Kanalausgang (104) an oder in eine Eintrittsöffnung (11) des Düsenmundstücks (1) mündet,
∘ das Düsenmundstück
• umfasst einen Strömungskanal (10) mit der Eintrittsöffnung (11) und einer Austrittsöffnung (12),
• eine radial zu einer Längsachse (L) ausgebildete zylindrische erste Dichtfläche (20),
• eine zwischen der ersten Dichtfläche (20) und der Austrittsöffnung (12) angeordnete Anschlagfläche (32), die quer zur Längsachse (L) sowie in Richtung der Austrittsöffnung (12) weisend ausgerichtet ist, und
• ein radial zur Längsachse (L) angeordnetes Koppelmittel (40) zur Festlegung des Düsenmundstücks (1) in der Formangussöffnung (202) der Formplatte (201),
∘ wobei der Düsenkörper (101) im Bereich des Kanalausgangs (104) eine radial zur Längsachse (L) ausgerichtete zylindrische Dichtfläche (105) ausbildet, und
∘ wobei das Düsenmundstück (1) mit seiner ersten Dichtfläche (20) dichtend und in Richtung der Längsachse (L) verschieblich an der Dichtfläche (105) des Düsenkörpers (101) gelagert ist,
▪ wobei das Düsenmundstück (1) mit seiner Austrittsöffnung (12) in die Formangussöffnung (202) eingeführt ist, und
▪ wobei die Formangussöffnung (202) ein Koppelmittel (204) aufweist, welches mit dem Koppelmittel (40) des Düsenmundstücks (1) in Eingriff steht,
**dadurch gekennzeichnet,**
▪ dass das Düsenmundstück (1) mit seinem Koppelmittel (40) an der Formplatte (201) festlegbar ist,
▪ wobei das Koppelmittel (40) ein Außengewinde ist, welches koaxial zur Längsachse (L) positioniert ist, und
▪ wobei das Koppelmittel (204) der Formangussöffnung (202) entsprechend der Gestaltung des Koppelmittels (40) des Düsenmundstücks (1) ein radial zur Längsachse (L) ausgerichtetes Innengewinde ist.

2. Spritzgießwerkzeug (200) nach Anspruch 1, **dadurch gekennzeichnet, dass** das Düsenmundstück (1) aus einem verschleißfesten Material besteht.

3. Spritzgießwerkzeug (200) nach Anspruch 1 oder 2, **dadurch gekennzeichnet, dass** zwischen dem Koppelmittel (40) und der Austrittsöffnung (12) eine radial zur Längsachse (L) ausgerichtete außenseitige zweite Dichtfläche (50) ausgebildet ist.

4. Spritzgießwerkzeug (200) nach einem der vorhergehenden Ansprüche, **dadurch gekennzeichnet, dass** die Austrittsöffnung (12) radial zur Längsachse (A) von einer stirnseitigen Formfläche (13) umgeben ist, die in einer Montageposition einen Bereich eines Formnestes (203) formgebend begrenzt.

5. Spritzgießwerkzeug (200) nach einem der Ansprüche 1 bis 4, **dadurch gekennzeichnet, dass** im Strömungskanal (10) eine radial zur Längsachse (L) ausgerichtete Nadeldichtfläche (14) für eine Verschlussnadel (110) ausgebildet ist.

6. Spritzgießwerkzeug (200) nach einem der Ansprüche 1 bis 4, **dadurch gekennzeichnet, dass** das Düsenmundstück (1) einen offenen Anguss ausbildet.

7. Spritzgießwerkzeug (200) nach einem vorhergehenden Ansprüche, **dadurch gekennzeichnet, dass** die Anschlagfläche (32) des Düsenmundstücks (1) an einer die Formangussöffnung (202) radial umgebenden Anschlagfläche (206) der Formangussöffnung (202) anliegt.

8. Spritzgießwerkzeug (200) nach einem der vorhergehenden Ansprüche, **dadurch gekennzeichnet, dass** das Düsenmundstück (1) zwischen dem Koppelmittel (40) und der Austrittsöffnung (12) eine radial zur Längsachse (L) ausgerichtete äußere zweite Dichtfläche (50) aufweist, und dass die Formangussöffnung (202) zwischen ihrem Koppelmittel (204) und dem Formnest (203) eine radial zur Längsachse (L) ausgerichtete Innendichtfläche (205) aufweist, wobei die zweite Dichtfläche (50) des Düsenmundstücks (1) und die Innendichtfläche (205) der Formangussöffnung (202) dichtend aneinander liegen.

## Claims

1. Injection moulding tool (200) for processing a free-flowing substance (M), with
- an injection moulding nozzle (100),
- a nozzle tip (1) and
- a moulding plate (201), which forms a mould cavity (203) into which a mould sprue opening (202) discharges,
- the injection moulding nozzle (100) comprises
- a nozzle body (101), in which at least one flow channel (102) is formed with a channel entry (103) and a channel exit (104) for the free-flowing substance (M),
- wherein the flow channel (102) with its channel exit (104) discharges onto or into an entry opening (11) of the nozzle tip (1),
- the nozzle tip comprises
- a flow channel (10) with the entry opening (11) and an exit opening (12),
- a first cylindrical sealing surface (20) formed radially to a longitudinal axis (L),
- an abutment surface (32) arranged between the first sealing surface (20) and the exit opening (12), which abutment surface is aligned perpendicular to the longitudinal axis (L) and pointing in the direction of the exit opening (12), and
- a coupling means (40) arranged radially to the longitudinal axis (L) for securing the nozzle tip (1) in the mould sprue opening (202) of the mould plate (201),
- wherein the nozzle body (101) in the region of the channel output (104) forms a cylindrical sealing surface (105) aligned radially to the longitudinal axis (L), and
- wherein the nozzle tip (1) with its first sealing surface (20) is mounted on the sealing surface (105) of the nozzle body (101) in a sealing manner and so as to be displaceable in the direction of the longitudinal axis (L),
- wherein the nozzle tip (1) with its exit opening (12) is inserted into the mould sprue opening (202), and
- wherein the mould sprue opening (202) has a coupling means (204) which is in engagement with the coupling means (40) of the nozzle tip (1),
**characterised in**
- **that** the nozzle tip (1) can be secured with its coupling means (40) onto the mould plate (201),
- wherein the coupling means (40) is an external thread which is positioned to be coaxial to the longitudinal axis (L) and
- wherein the coupling means (204) of the mould sprue opening (202) according to the form of the coupling means (40) of the nozzle tip (1) is an internal thread aligned radially to the longitudinal axis (L).

2. Injection moulding tool (200) according to claim 1, **characterised in that** the nozzle tip (1) is made from a wear-resistant material.

3. Injection moulding tool (200) according to claim 1 or 2, **characterised in that** between the coupling means (40) and the exit opening (12) a second outer sealing surface (50) is formed which is oriented radially to the longitudinal axis (L).

4. Injection moulding tool (200) according to any of the preceding claims, **characterised in that** the exit opening (12) is surrounded by an end face moulding surface (13) radial to the longitudinal axis (A), which moulding surface delimits an area of a mould cavity (203) in a shaping manner when in a mounted position.

5. Injection moulding tool (200) according to any of claims 1 to 4, **characterised in that** a needle sealing surface (14) for a shut-off needle (110) is formed in the flow channel (10), the needle sealing surface being oriented radially to the longitudinal axis (L).

6. Injection moulding tool (200) according to any of claims 1 to 4, **characterised in that** the nozzle tip (1) forms an open sprue.

7. Injection moulding tool (200) according to any of the preceding claims, **characterised in that** the abutment surface (32) of the nozzle tip (1) bears against an abutment surface (206) of the mould sprue opening (202) that radially surrounds the mould sprue opening (202).

8. Injection moulding tool (200) according to any of the preceding claims, **characterised in that** the nozzle tip (1) has a second outer sealing surface (50) between the coupling means (40) and the exit opening (12) oriented radially to the longitudinal axis (L), and **in that** the mould sprue opening (202) has an inner sealing surface (205) between its coupling means (204) and the mould cavity (203) oriented radially to the longitudinal axis (L), wherein the second sealing surface (50) of the nozzle tip (1) and the inner sealing surface (205) of the mould sprue opening (202) bear against one another in a sealing manner.

## Revendications

1. Outil de moulage par injection (200) pour le traitement d'une matière (M) pouvant s'écouler, avec
- une buse de moulage par injection (100),
- une embouchure de buse (1) et
- une plaque de moulage (201) qui réalise une cavité de moulage (203) dans laquelle un orifice d'injection de moulage (202) débouche,
- la buse de moulage par injection (100) comporte
- un corps de buse (101) dans lequel au moins un canal d'écoulement (102) est réalisé avec une entrée de canal (103) et une sortie de canal (104) pour la matière (M) pouvant s'écouler,
- dans lequel le canal d'écoulement (102) débouche avec sa sortie de canal (104) sur ou dans un orifice d'entrée (11) de l'embouchure de buse (1),
- l'embouchure de buse
- comporte un canal d'écoulement (10) avec l'orifice d'entrée (11) et un orifice de sortie (12),
- une première surface étanche (20) cylindrique réalisée radialement à un axe longitudinal (L),
- une surface de butée (32) agencée entre la première surface étanche (20) et l'orifice de sortie (12) qui est orientée transversalement à l'axe longitudinal (L) ainsi qu'en direction de l'orifice de sortie (12), et
- un moyen de couplage (40) agencé radialement à l'axe longitudinal (L) pour la fixation de l'embouchure de buse (1) dans l'orifice d'injection de moulage (202) de la plaque de moulage (201),
- dans lequel le corps de buse (101) dans la zone de la sortie de canal (104) réalise une surface étanche (105) cylindrique orientée radialement à l'axe longitudinal (L), et
- dans lequel l'embouchure de buse (1) est logée avec sa première surface étanche (20) de manière étanche et en direction de l'axe longitudinal (L) de manière mobile sur la surface étanche (105) du corps de buse (101),
- dans lequel l'embouchure de buse (1) est introduite avec son orifice de sortie (12) dans l'orifice d'injection de moulage (202), et
- dans lequel l'orifice d'injection de moulage (202) présente un moyen de couplage (204) qui est en prise avec le moyen de couplage (40) de l'embouchure de buse (1),
**caractérisé en ce**
- **que** l'embouchure de buse (1) peut être fixée avec son moyen de couplage (40) à la plaque de moulage (201),
- dans lequel le moyen de couplage (40) est un filetage extérieur qui est positionné coaxialement à l'axe longitudinal (L), et
- dans lequel le moyen de couplage (204) de l'orifice d'injection de moulage (202) selon la forme du moyen de couplage (40) de l'embouchure de buse (1) est un filetage intérieur orienté radialement à l'axe longitudinal (L).

2. Outil de moulage par injection (200) selon la revendication 1, **caractérisé en ce que** l'embouchure de buse (1) se compose d'un matériau résistant à l'usure.

3. Outil de moulage par injection (200) selon la revendication 1 ou 2, **caractérisé en ce qu'**une seconde surface étanche (50) côté extérieur orientée radialement à l'axe longitudinal (L) est réalisée entre le moyen de couplage (40) et l'orifice de sortie (12).

4. Outil de moulage par injection (200) selon l'une des revendications précédentes, **caractérisé en ce que** l'orifice de sortie (12) est entouré radialement à l'axe longitudinal (A) par une surface de moulage (13) côté avant qui délimite par formage dans une position de montage une zone d'une cavité de moulage (203).

5. Outil de moulage par injection (200) selon l'une des revendications 1 à 4, **caractérisé en ce qu'**une surface étanche d'aiguille (14) orientée radialement à l'axe longitudinal (L) pour une aiguille de fermeture (110) est réalisée dans le canal d'écoulement (10).

6. Outil de moulage par injection (200) selon l'une des revendications 1 à 4, **caractérisé en ce que** l'embouchure de buse (1) réalise une injection ouverte.

7. Outil de moulage par injection (200) selon l'une des revendications précédentes, **caractérisé en ce que** la surface de butée (32) de l'embouchure de buse (1) repose contre une surface de butée (206) entourant radialement l'orifice d'injection de moulage (202) de l'orifice d'injection de moulage (202).

8. Outil de moulage par injection (200) selon l'une des revendications précédentes, **caractérisé en ce que** l'embouchure de buse (1) présente entre le moyen de couplage (40) et l'orifice de sortie (12) une seconde surface étanche (50) extérieure orientée radialement à l'axe longitudinal (L), et que l'orifice d'injection de moulage (202) présente entre son moyen de couplage (204) et la cavité de moulage (203) une surface étanche intérieure (205) orientée radialement à l'axe longitudinal (L), dans lequel la seconde surface étanche (50) de l'embouchure de buse (1) et la surface étanche intérieure (205) de l'orifice d'injection de moulage (202) reposent de manière étanche l'une contre l'autre.
